# EUROPEAN PATENT SPECIFICATION

(11) **EP 3 029 517 B1**
(45) Date of publication and mention of the grant of the patent: **13.12.2017**
(21) Application number: 15181288.0
(22) Date of filing: 17.08.2015
(51) Int. Cl.: G02F 1/13357, F21V 8/00, G02B 6/00

(54) **DISPLAY APPARATUS COMPRISING A BACKLIGHT**
ANZEIGEVORRICHTUNG MIT RÜCKBELEUCHTUNG
APPAREIL D'AFFICHAGE AVECRÉTROÉCLAIRAGE

(30) Priority: 04.12.2014 KR 20140172858
(43) Date of publication of application: 08.06.2016
(73) Proprietor: Samsung Electronics Co., Ltd., Gyeonggi-do 443-742 (KR)
(72) Inventor: MINAMI, Masaru, Gyeonggi-do (KR); KANG, Ki Hyung, Gyeonggi-do (KR)
(74) Representative: Appleyard Lees IP LLP

(56) References cited:
- US-A1- 2008 151 142
- US-A1- 2009 051 852
- US-A1- 2010 110 337
- US-A1- 2013 094 242

## Description

### BACKGROUND

### 1. Field

Apparatuses consistent with exemplary embodiments relate to a display apparatus provided with a backlight unit for supplying light to a display panel.

### 2. Description of the Related Art

A display apparatus is an apparatus which is capable of displaying a screen, and examples of the display apparatus include a monitor and a television.

The display apparatus includes a display panel made up of a liquid crystal panel to display a screen thereon, and a backlight to supply light to the display panel.

The backlight is classified as a direct type backlight, in which a light source is disposed at a rear of a display panel to directly supply light to a rear surface of the display panel, and an edge type backlight including a light guide plate disposed at a rear of the display panel to supply light to both side edges of the light guide plate.

In addition, there is a backlight including a substrate and a light source implemented using a plurality of light emitting diodes disposed on the substrate.

US 2010/110337 A1, US 2013/094242 A1, US 2008/151142 A1, US 2009/051852 A1 show display apparatuses with backlight assemblies.

### SUMMARY

Therefore, it is an aspect of exemplary embodiments to provide a backlight unit capable of reducing a bright section and a dark section.

Additional aspects of the exemplary embodiments will be set forth in part in the description which follows and, in part, will be obvious from the description, or may be learned by practice of the invention. The present invention provides a display apparatus as defined in claim 1. Further embodiments of the invention are defined in the dependent claims. As is apparent from the above, light supplied from a light source is introduced to a side end of a light guide plate after being diffused through a diffusion member, thereby preventing a dark section and a bright section from being generated at the side end of the light guide plate.

### BRIEF DESCRIPTION OF THE DRAWINGS

These and/or other aspects will become apparent and more readily appreciated from the following description of the exemplary embodiments, taken in conjunction with the accompanying drawings of which:
FIG. 1 is a perspective view illustrating a display apparatus according to the first exemplary embodiment of the present disclosure;
FIG. 2 is an exploded perspective view of a display module applied to the display apparatus according to a first comparative example;
FIG. 3 is a cross-sectional view illustrating the display module applied to the display apparatus according to the first comparative example;
FIG. 4 is a front side view illustrating a backlight applied to the display apparatus according to the first comparative example;
FIG. 5 is a cross-sectional view illustrating an installation state of a light source and a diffusion member that are applied to the display apparatus according to the first comparative example;
FIG. 6 is a cross-sectional view illustrating a display module applied to a three-dimensional display apparatus according to an embodiment of the present disclosure; and
FIG. 7 is a cross-sectional view illustrating a display module applied to a three-dimensional display apparatus according to a second comparative example.

### DETAILED DESCRIPTION

Various comparative examples and exemplary embodiments will now be described more fully with reference to the accompanying drawings in which some exemplary embodiments are shown. These inventive concepts may, however, be embodied in different forms and should not be construed as limited to the exemplary embodiments set forth herein. Rather, these exemplary embodiments are provided so that this disclosure is thorough and complete and fully conveys the inventive concept to those skilled in the art. In the drawings, the sizes and relative sizes of layers and regions may be exaggerated for clarity.

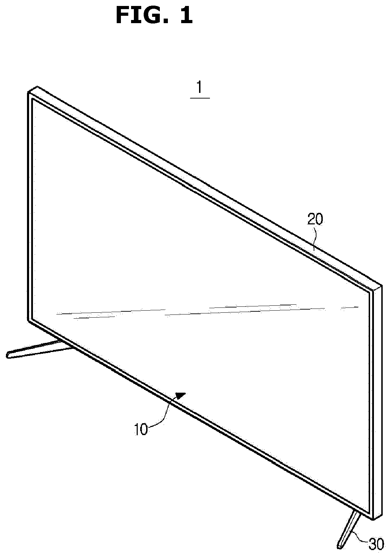

Referring to FIG. 1, a display apparatus 1 according to an exemplary embodiment of the present disclosure includes a display module 10 to display an image thereon, and a case 20 to accommodate the display module 10 while forming the external appearance of the display apparatus 1. A stand 30 is connected to a rear surface of the case 20 such that the display apparatus 1 stands in an upright position on a horizontal plane.

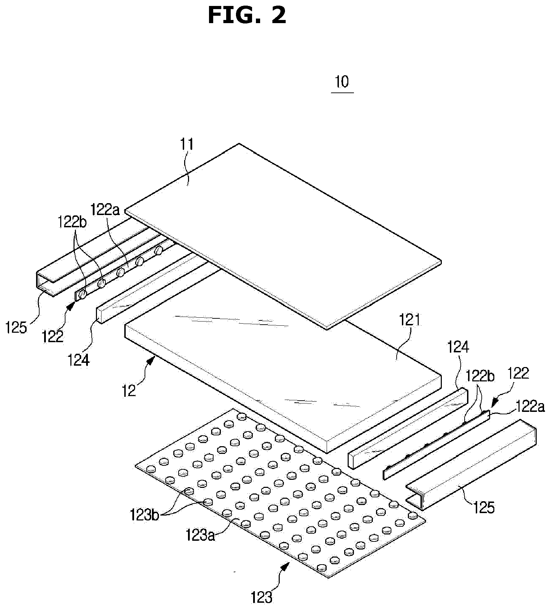

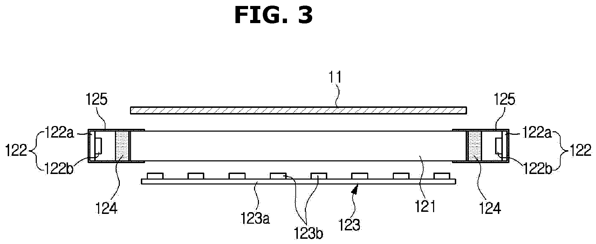

Referring to FIGS. 2 and 3, the display module 10 includes a display panel 11 to display an image thereon, and a backlight 12 to generate light and supply the generated light to the display panel 11.

The display panel 11 is made up of a liquid crystal panel having a shape of a quadrangular plate. The backlight 12 includes a light guide plate 121 to guide light to the display panel 11, and light sources 122 and 123 to generate light.

The light guide plate 121 is formed of transparent material, and is provided in a shape of a quadrangular plate corresponding to the display panel 11 and disposed at a rear of the display panel 11. Although not shown, the light guide plate 121 may be provided with patterns allowing light to be selectively emitted from the light guide plate 121 to the display panel 11 among respective portions, so that the light guide plate 121 implements a parallax barrier function by the patterns.

The light sources 122 and 123 include three dimensional light sources 122 used to display a three dimensional image in the display apparatus 1, and a two dimensional light source 123 used to display a two dimensional image in the display apparatus 1.

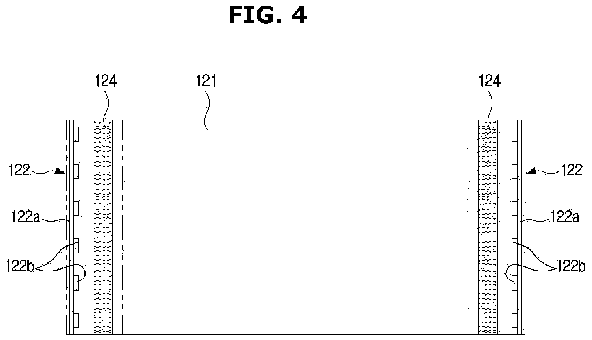

The three dimensional light sources 122 include respective substrates 122a and a plurality of respective light emitting diodes 122b disposed on the respective substrates 122a, and the two dimensional light source 123 includes a substrate 123a and a plurality of light emitting diodes 123b disposed on the substrates 123a. The substrates 122a of the three dimensional light sources 122 are disposed to be parallel to side ends of the light guide plate 122, and the light emitting diodes 122b of the three dimensional light sources 122 are disposed to face the side ends of the light guide plate 121 to irradiate light toward the side ends of the light guide plate 121. The light emitting diodes 122b are spaced apart from each other in a lengthwise direction of the substrate 122a as shown in FIG. 4. According to an exemplary embodiment of the present disclosure, the two units of the three dimensional light sources 122 are disposed at both sides of the light guide plate 121, respectively, so that light is introduced into the light guide plate 121 through both side ends of the light guide plate 121.

The substrate 123a of the two dimensional light source 123 is provided in a shape of a quadrangular plate, and disposed at a rear of the light guide plate 121 to be parallel to the light guide plate 121, and the light emitting diodes 123b are disposed on a front surface of the substrate 123a to face a rear surface of the light guide plate 121 to irradiate light toward the rear surface of the light guide plate 121.

Accordingly, light generated from the three dimensional light sources 122 are introduced into the light guide plate 121 through both side ends of the light guide plate 121, and then emitted to the display panel 11 provided at a front of the light guide plate 121. Light generated from the two dimensional light source 123 is introduced into the light guide plate 121 through the rear surface of the light guide plate 121, and then emitted to the display panel 11 by directly passing through the light guide plate 121.

As described above, the three dimensional light source 122 has the plurality of light emitting diodes 122b spaced apart from each other in a lengthwise direction of the substrate 122a as shown in FIG. 4.

Through such a configuration of the light guide plate 121, a greater amount of light is transmitted to portions adjacent to the light emitting diodes 122b of the three dimension light source 122, and a smaller amount of light is transmitted to portions distant from the light emitting diodes 122b of the three dimension light source 122, so that bright sections and dark sections may be generated at the side ends of the light guide plate 121.

Accordingly, in order to prevent the bright sections and the dark sections from being generated at the light guide plate 121, the backlight 12 includes diffusion members 124 each disposed between respective ones of the three dimensional light source 122 and respective ends of the light guide plate 121.

The diffusion member 124 diffuses the light and transmits light to the light guide plate 121. According to an exemplary embodiment of the present disclosure, the diffusion member 124 is formed of semitransparent material having a white color to diffuse light. In a comparative example, the diffusion member 124 has a shape of a quadrangular bar, and is provided in two units thereof and disposed at lateral sides of the light guide plate 121 so as to be parallel to both side ends of the light guide plate 121. A first surface provided at one side of the diffusion member 124 is disposed to face the three dimensional light source 122, and a second surface of the diffusion member 124 positioned opposite to the first surface is disposed to face the side end of the light guide plate 121. The substrate 122a of the three dimensional light source 122 is spaced apart from the first surface of the diffusion member 124 to be parallel to the first surface, and the light emitting diodes 122b of the three dimensional light source 122 are also spaced apart from the first surface of the diffusion member 124.

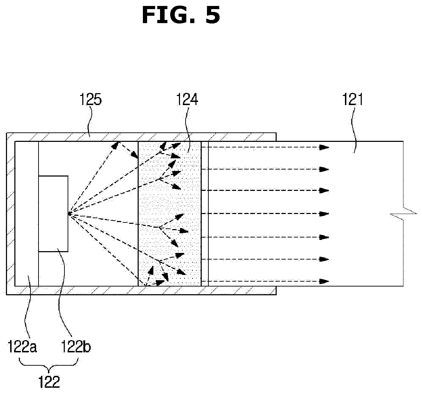

Accordingly, referring to FIG. 5, light generated from the three dimensional light source 122 is diffused in the course of being introduced into the diffusion member 124 through the first surface of the diffusion member and passing through the diffusion member 124, and the diffused light is emitted through the second surface of the diffusion member 124 and then introduced into the side end of the light guide plate 121. In this case, light generated from the light emitting diodes 122b is diffused in the course of passing through the diffusion member 124, so that light emitted from the second surface of the diffusion member 124 has a uniform distribution of light throughout the second surface. Accordingly, light having a uniform light distribution is introduced into the side ends of the light guide plate 121, thereby preventing a dark section and a bright section from being generated at the side ends of the light guide plate 121, which are adjacent to the three dimensional light sources 122.

In addition, the backlight 12 includes a reflective sheet 125 to prevent light generated from the three dimensional light source 122 from leaking. The reflective sheet 125 is provided to cover an outside of a space formed between the three dimensional light source 122 and the diffusion member 124, so that light generated from the light source 122 is entirely introduced into the diffusion member 124. According to an exemplary embodiment of the present disclosure, the reflective sheet 125 is provided in two units thereof so as to correspond to the two units of the three dimensional light sources 122 and the two units of the diffusion members 124. In addition, the reflective sheet 125 extends to cover a portion of the side end of the light guide plate 121.

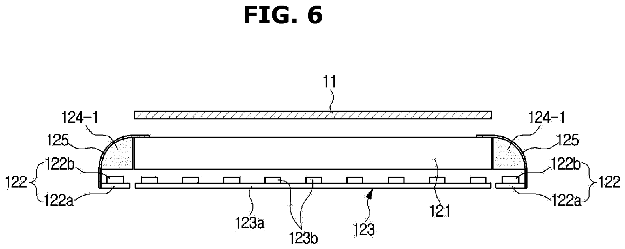

According to a comparative example, the diffusion member 124 is provided in a shape of a quadrangular bar, and the first surface facing the three dimensional light source 122 and the second surface facing the side end of the light guide plate 121 are positioned opposite to each other, but the configuration of the diffusion member 124 is not limited thereto. According to the invention and referring to FIG. 6, the substrate 122a of the three dimensional light source 122 is disposed at a lateral side of the substrate 123a of the two dimensional light source 123 so that the first surface and the second surface of the diffusion member 124 are provided perpendicular to be each other. In this case, the diffusion member 124 has a quadrant cross-section rather than a quadrangular cross-section.

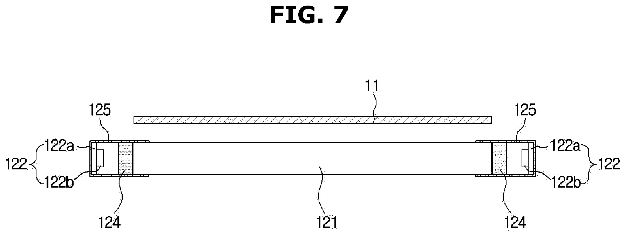

The backlight 12 according to an exemplary embodiment of the present disclosure includes the three dimensional light source 122 and the two dimensional light source 123, so that the display apparatus 1 represents a two dimensional screen and a three dimensional screen, but the present disclosure is not limited thereto. Referring to FIG. 7, the diffusion member 124 and the reflective sheet 125 may be applied to a display apparatus that displays one of the three dimensional image and the two dimensional image, for example, by only using the one pair of light sources 122 facing both side ends of the light guide plate 121, without using the two dimensional light sources 123.

Although the three dimensional light source 122 includes the substrate 122a and the light emitting diodes 122b so as to diffuse light generated from the light emitting diodes 122b, the present disclosure is not limited thereto. Even if different types of light sources are used other than the light emitting diodes 122b, the diffusion member 124 according to the present disclosure may be used such that the amount of light transmitted to the side ends of the light guide plate is uniformly distributed.

In addition, both side ends of the reflective sheet 125 according to an exemplary embodiment of the present disclosure extend to cover a portion of the side end of the light guide plate 121. Such a structure of the present disclosure is provided to cover a dark section and a bright section that may be formed at a portion of the side end of the light guide plate 121.

Since the backlight 12 including the diffusion member 124 according to the present disclosure may prevent the dark section and the bright section from being formed at the side end of the light guide plate 121, the reflective sheet 125 need not be configured to cover the side end of the light guide plate 121. In addition, such a construction enables light to be emitted through the entire front surface of the light guide plate 121, so that a display area of the display panel 11 may have the same size as that of the light guide plate 121.

In addition, although the backlight 12 according to an exemplary embodiment of the present disclosure includes one pair of the three dimensional light sources 122 which correspond to the both side ends of the light guide plate 121 and one pair of the diffusion members 124 which correspond to the both side ends of the light guide plate 121, the present disclosure is not limited thereto. For example, the backlight 12 may include one unit of the three dimensional light unit 122 corresponding to one side end of the light guide plate 121 and one unit of the diffusion member 124 corresponding to the one side end of the light guide plate 121, and may include a reflective member (not shown) disposed at the other side end of the light guide plate 121 to reflect light.

Although the patterns provided on the light guide plate 12 allow light to be selectively emitted from the light guide plate 121 to the display panel 11, the present disclosure is not limited thereto. For example, a parallax barrier or a lenticular lens may be disposed between the display panel 11 and the light guide plate 121 without having to form a configuration of the pattern.

Although a few exemplary embodiments have been shown and described, it would be appreciated by those skilled in the art that changes may be made in these exemplary embodiments without departing from the scope of the invention, which is defined in the claims.

## Claims

1. A display apparatus (1) comprising:
a display panel (11);
a backlight (12) to supply light to the display panel,
wherein the backlight comprises a light guide plate (121) to guide light to the display panel;
at least one first light source (122) disposed at a side end of the light guide plate; and
a second light source (123) disposed at a rear of the light guide plate;
at least one diffusion member (124-1) is disposed between the at least one first light source (122) and the side end of the light guide plate (121);
the diffusion member comprising :
a first surface facing the first light source (122), and a second surface facing the side end of the light guide plate (121), **characterized in that** the first surface and the second surface are positioned perpendicular to each other.

2. The display apparatus (1) of claim 1, wherein the diffusion member (124-1) has a quadrant cross-section.

3. The display apparatus (1) of claim 2, wherein the first light source (122) comprises a substrate (122a) disposed to be parallel to the first surface, and a plurality of light emitting diodes (122b) disposed on the substrate to face the first surface.

4. The display apparatus (1) of clam 1, wherein the diffusion member (124-1) is formed of semitransparent material having a white color.

5. The display apparatus (1) of claim 1, wherein the backlight (12) comprises at least one reflective sheet (125) provided to cover a space between the at least one first light source (122) and the at least one diffusion member (124-1).

6. The display apparatus (1) of claim 5, wherein an end of the reflective sheet (125) extends to cover a portion of the side end of the light guide plate (121).

7. The display apparatus (1) of claim 1, wherein:
the at least one first light source (122) comprises one pair of light sources which correspond to both side ends of the light guide plate (121), respectively; and
the at least one diffusion member (124-1) comprises one pair of diffusion members each disposed between respective ones of the side ends of the light guide plate and a respective ones of the pair of the light sources.

## Patentansprüche

1. Anzeigevorrichtung (1), umfassend:
eine Anzeigetafel (11);
eine Rückbeleuchtung (12) zur Versorgung der Anzeigetafel mit Licht,
wobei die Rückbeleuchtung eine Lichtleiterplatte (121) zum Leiten von Licht an die Anzeigetafel umfasst;
mindestens eine erste Lichtquelle (122), die sich an einem Seitenende der Lichtleiterplatte befindet; und
eine zweite Lichtquelle (123), die sich auf einer Rückseite der Lichtleiterplatte befindet;
mindestens ein Diffusionsglied (124-1), das sich zwischen der mindestens einen ersten Lichtquelle (122) und dem Seitenende der Lichtleiterplatte (121) befindet;
wobei das Diffusionsglied Folgendes umfasst:
eine erste Oberfläche, die der ersten Lichtquelle (122) zugewandt ist, und
eine zweite Oberfläche, die dem Seitenende der Lichtleiterplatte (121) zugewandt ist,
**dadurch gekennzeichnet, dass**
die erste Oberfläche und die zweite Oberfläche senkrecht zueinander positioniert sind.

2. Anzeigevorrichtung (1) nach Anspruch 1, wobei das Diffusionsglied (124-1) einen Quadrantquerschnitt aufweist.

3. Anzeigevorrichtung (1) nach Anspruch 2, wobei die erste Lichtquelle (122) ein Substrat (122a), das parallel zur ersten Oberfläche angeordnet ist, und mehrere Leuchtdioden (122b), die auf dem Substrat zur ersten Oberfläche hin weisend angeordnet sind, umfasst.

4. Anzeigevorrichtung (1) nach Anspruch 1, wobei das Diffusionsglied (124-1) aus einem halbtransparenten Material mit einer weißen Farbe ausgebildet ist.

5. Anzeigevorrichtung (1) nach Anspruch 1, wobei die Rückbeleuchtung (12) mindestens eine reflektierende Scheibe (125) umfasst, die zum Überdecken eines Raums zwischen der mindestens einen ersten Lichtquelle (122) und dem mindestens einen Diffusionsglied (124-1) bereitgestellt ist.

6. Anzeigevorrichtung (1) nach Anspruch 5, wobei sich ein Ende der reflektierenden Scheibe (125) zum Überdecken eines Teils des Seitenendes der Lichtleiterplatte (121) erstreckt.

7. Anzeigevorrichtung (1) nach Anspruch 1, wobei:
die mindestens eine erste Lichtquelle (122) ein Paar Lichtquellen umfasst, die jeweils den zwei Seitenenden der Lichtleiterplatte (121) entsprechen; und
das mindestens eine Diffusionsglied (124-1) ein Paar Diffusionsglieder umfasst, die sich jeweils zwischen einem jeweiligen der Seitenenden der Lichtleiterplatte und einer jeweiligen des Paars Lichtquellen befinden.

## Revendications

1. Appareil d'affichage (1) comprenant :
un panneau d'affichage (11) ;
un rétro-éclairage (12) pour envoyer de la lumière au panneau d'affichage ;
dans lequel le rétro-éclairage comprend une plaque de guidage de lumière (121) pour guider la lumière vers le panneau d'affichage ;
au moins une première source de lumière (122) disposée à une extrémité latérale de la plaque de guidage de lumière ; et
une seconde source de lumière (123) disposée à l'arrière de la plaque de guidage de lumière ;
au moins un élément de diffusion (124-1) est disposé entre l'au moins une première source de lumière (122) et l'extrémité latérale de la plaque de guidage de lumière (121) ;
l'élément de diffusion comprenant :
une première surface orientée vers la première source de lumière (122) ; et
une seconde surface orientée vers l'extrémité latérale de la plaque de guidage de lumière (121) ;
**caractérisé en ce que** :
la première surface et la seconde surface sont disposées perpendiculairement l'une à l'autre.

2. Appareil d'affichage (1) selon la revendication 1, dans lequel l'élément de diffusion (124-1) a une section transversale de quadrant.

3. Appareil d'affichage (1) selon la revendication 2, dans lequel la première source de lumière (122) comprend un substrat (122a) disposé pour être parallèle à la première surface, et une pluralité de diodes électroluminescentes (122b) disposées sur le substrat pour faire face à la première surface.

4. Appareil d'affichage (1) selon la revendication 1, dans lequel l'élément de diffusion (124-1) est fait d'un matériau semi-transparent ayant une couleur blanche.

5. Appareil d'affichage (1) selon la revendication 1, dans lequel le rétro-éclairage (12) comprend au moins une feuille réfléchissante (125) disposée pour couvrir un espace entre l'au moins une première source de lumière (122) et l'au moins un élément de diffusion (124-1).

6. Appareil d'affichage (1) selon la revendication 5, dans lequel une extrémité de la feuille réfléchissante (125) s'étend de manière à couvrir une partie de l'extrémité latérale de la plaque de guidage de lumière (121).

7. Appareil d'affichage (1) selon la revendication 1, dans lequel :
l'au moins une première source de lumière (122) comprend une paire de sources de lumière qui correspondent aux deux extrémités latérales de la plaque de guidage de lumière (121), respectivement ; et
l'au moins un élément de diffusion (124-1) comprend une paire d'éléments de diffusion chacun disposé entre des extrémités latérales respectives de la plaque de guidage de lumière et des sources respectives de la paire de sources de lumière.
